**Europäisches Patentamt**

(19) **European Patent Office**

**Office européen des brevets**

(11) Numéro de publication: **0 040 165**
**B1**

(12) # FASCICULE DE BREVET EUROPEEN

(45) Date de publication du fascicule du brevet:
**02.10.85**

(51) Int. Cl.⁴: **A 61 C 5/10**, A 61 C 9/00,
A 61 C 19/04

(21) Numéro de dépôt: **81420071.3**

(22) Date de dépôt: **08.05.81**

(54) **Procédé de réalisation d'une prothèse.**

(30) Priorité: **09.05.80 FR 8010967**

(43) Date de publication de la demande:
**18.11.81 Bulletin 81/46**

(45) Mention de la délivrance du brevet:
**02.10.85 Bulletin 85/40**

(84) Etats contractants désignés:
**AT BE CH DE GB IT LI LU NL SE**

(56) Documents cités:
**US - A - 3 861 044**
**US - A - 4 182 312**

(73) Titulaire: **Duret, Francois, Rue Paul Claudel, Le Grand Lemps Isère (FR)**
Titulaire: **Termoz, Christian, 2, Place Victor Hugo, Grenoble Isère (FR)**
Titulaire: **Michallet, Elisabeth epouse Duret, Rue Paul Claudel, Le Grand Lemps Isère (FR)**

(72) Inventeur: **Duret, Francois, Rue Paul Claudel, Le Grand Lemps Isère (FR)**
Inventeur: **Termoz, Christian, 2, Place Victor Hugo, Grenoble Isère (FR)**
Inventeur: **Michallet, Elisabeth epouse Duret, Rue Paul Claudel, Le Grand Lemps Isère (FR)**

(74) Mandataire: **Maureau, Philippe, Cabinet Germain & Maureau Le Britannia - Tour C 20, bld Eugène Déruelle, F-69003 Lyon (FR)**

## Description

La présente invention a pour objet un procédé de réalisation d'une prothèse.

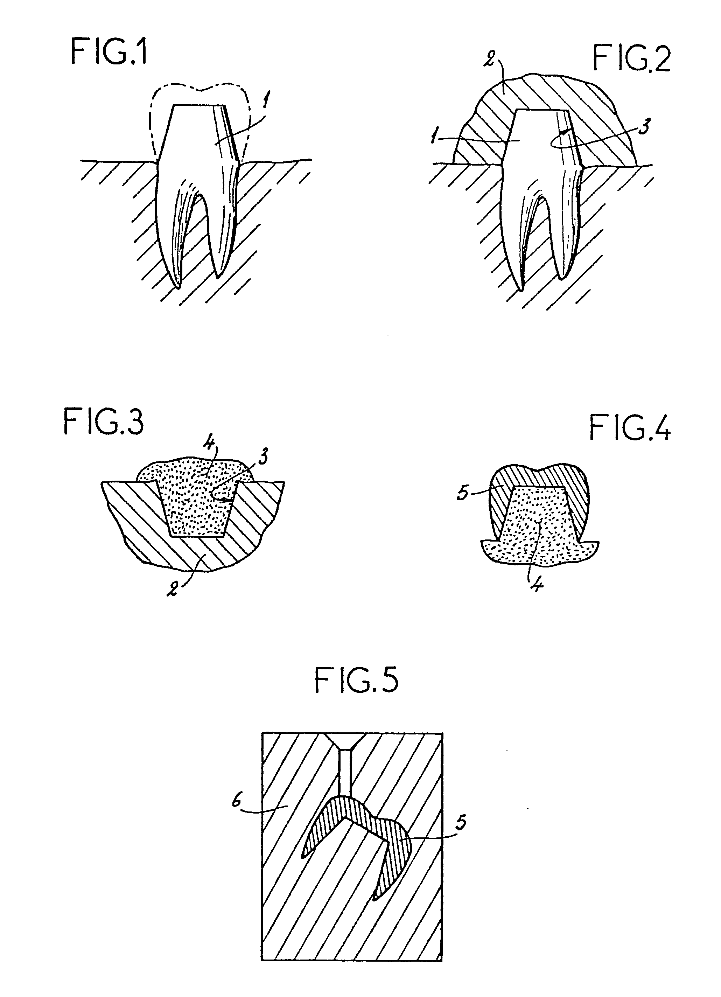

Le type de prothèse dont il s'agit comprend par exemple les couronnes utilisées en art dentaire pour le remplacement de dents. La réalisation d'une couronne nécessite les diverses opérations suivantes, illustrées par les figures 1 à 5 du dessin schématique annexé:

— Taille de la dent à remplacer pour obtenir un moignon 1 de forme tronconique comme montré à la figure 1 du dessin schématique annexé.

— Prise de l'empreinte du moignon à l'aide d'une pâte élastomère en vue d'obtenir un moule 2 dont la partie creuse 3 a un profil complémentaire de celui du moignon, comme montré à la figure 2.

— Coulée de plâtre 4 dans le moule pour obtenir la reproduction du moignon, comme montré à la figure 3.

— Réalisation de la couronne 5 en cire en tenant compte des dents adjacentes et antagonistes, comme montré à la figure 4.

— Mise en place de la couronne 5 dans un cylindre de revêtement 6, comme montré à la figure 5.

— Chauffage de l'ensemble pour la réalisation de la sublimation de la cire.

— Injection de métal fondu dans la cavité précédemment occupée par la cire.

— Démoulage puis polissage de la couronne métallique ainsi obtenue et,

— Pose en bouche.

Il s'agit d'une technique très ancienne présentant de nombreux inconvénients et notamment une mise en œuvre longue et fastidieuse nécessitant, d'une part, l'intervention d'un chirurgiendentiste et, d'autre part, d'un mécanicien, conduisant à des délais de réalisation assez importants.

Il faut également noter une relative imprécision due au grand nombre d'étapes, un inconfort du patient, et des possibilités d'allergie chez celui-ci, des problèmes psychologiques chez les enfants; et au niveau de la réalisation de la prothèse proprement dite une restriction des matériaux utilisés qui doivent être fluides ou malléables à des températures facilement accessibles, un coût élevé du matériel utilisé qui est constitué notamment par un four, une fronde et une sableuse, et une imprécision due au défaut de maîtrise de la dilatation des matériaux.

D'autres pièces prothétiques posent également des problèmes de réalisation tels que celles utilisées en ostéosynthèse et nécessitant l'utilisation de la méthode dite de »l'empreinte sanglante«, c'est-à-dire correspondant à une intervention chirurgicale pour la seule réalisation d'une empreinte directement sur l'os lésé.

Le brevet US 3 861 044 concerne un procédé de réalisation d'une prothèse dentaire et plus spécialement d'un inlay, consistant à préparer la dent à traiter, à effectuer une saisie optique de la zone de la dent devant recevoir la prothèse par une technique photographique traditionnelle, à transférer les informations fournies par la saisie optique à une machine-outil à commande numérique, à boucher la cavité ménagée dans la dent par de la cire, afin de reconstituer le profil théorique de l'extérieur de la prothèse à obtenir, à réaliser une saisie photographique de la surface extérieure de la cire, à transférer les informations de cette seconde saisie à la machineoutil à commande numérique, puis à usiner la prothèse à partir des deux séries de valeurs résultant des deux saisies optiques, fournies successivement à la machineoutil.

Ce procédé nécessite d'effectuer deux saisies optiques, et d'effectuer un travail dans la bouche du patient préalablement à la seconde saisie. Ce procédé ne peut, compte tenu de l'importance du travail en bouche, s'appliquer qu'à des petites prothèses. En outre, les valeurs résultant des deux saisies étant transférées directement à la machine-outil, il n'est pas possible d'adopter les cotes de la prothèse aux nombreux paramètres imposés par l'environnement de celle-ci, afin qu'elle soit posée dans les meilleures conditions.

La présente invention vise à fournir un procédé remédiant à ces inconvénients.

Ce procédé consiste à réalisée une empreinte optique de la partie du corps destinée à recevoir la prothèse par une technique d'interférométrie, à réaliser, de façon connue en soi, une conversion analogique numérique ou analogique électrique de l'information obtenue lors de la prise d'empreinte, puis à effectuer un traitement des données obtenues par la prise d'empreinte en adaptant celles-ci à des informations théoriques stockées dans la mémoire du calculateur utilisé pour le traitement, et en tenant compte d'un certain nombre de paramètres, tels que nature des matériaux utilisés, environnement de la prothèse, conditions d'utilisation de celle-ci, en vue de déterminer la forme de la prothèse, puis à fournir, de façon connue en soi, les informations obtenues à une machine-outil à commande numérique réalisant la sculpture de la prothèse.

Ce procédé permet la réalisation entièrement automatique d'une prothèse avec possibilité de conservation de l'empreinte optique. Si ce procédé nécessite un appareillage relativement sophistiqué et onéreux puisque nécessitant un ordinateur et une machine à commande numérique, il présente l'avantage d'une précision très importante dans la réalisation de la prothèse et d'une grande rapidité d'exécution compte tenu de la suppression de toutes les phases intermédiaires des techniques actuelles. Cette suppression des phases intermédiaires et le gain de temps obtenu, permettant un amortissement rapide du matériel, d'autant plus que l'ordinateur mis en œuvre peut être également utilisé à d'autres fins.

Selon un mode de mise en œuvre, ce procédé consiste à réaliser la prise d'empreinte par la technique d'holographie.

Celle-ci consiste à utiliser une source d'ondes, afin d'obtenir l'empreinte sous forme d'interférence d'ondes. Or, une interférence d'ondes portant en elle-même la notion de distance, en effectuant un hologramme on réalise une empreinte indéformable.

Conformément à une première possibilité, l'onde est recueillie sur une plaque holographique avec en interférence une onde de référence de longueur d'onde connue.

Selon une autre possibilité, l'information est reçue directement sur un convertisseur analogique numérique ou analogique électrique.

Avantageusement, l'empreinte est obtenue par projection sur l'organe à équiper d'une prothèse, d'une onde parfaitement monochromatique de type laser, non traumatisante pour les tissus, d'une puissance de 100 millijoules par exemple.

La prise d'empreinte peut être réalisée sur des organes visibles tels que des moignons de dents dans le cas où la prothèse est une couronne dentaire ou à travers certaines matières telles que peau et tissus pour visualiser des organes sous-jacents, par exemple pour la réalisation de prothèses d'ostéosynthèse, sans avoir à recourir à la technique de l'empreinte sanglante.

A partir de l'hologramme, il est procédé à une conversion analogique numérique, les numéros correspondant aux dimensions de la pièce à partir de laquelle on va travailler. Il est rappelé qu'in convertisseur analogique numérique est un appareil qui, utilisant des données analogiques, par exemple l'intensité des franges d'interférence les transforme en système binaire. Cette transformation exclut toute imprécision car les chiffres ont une valeur absolue et c'est sur eux que les différents programmes agiront.

Un système de multiplexage est couplé au convertisseur qui transmet des informations en code binaire. Ces informations sont transmises par un convertisseur analogique numérique à une machine outil à commande automatique.

A ce stade, la transmission des informations peut être effectuée sous diverses formes connues en informatique telles que bandes perforées, bandes magnétiques ou disques.

Toutes les techniques d'usinage peuvent être utilisées et notamment usinage direct de la pièce par usure ou par découpe de masque.

Comme il ressort de ce qui précède, l'invention apporte une grande amélioration à la technique existante en fournissant un procédé assurant la réalisation automatique d'une prothèse sans nécessiter une prise d'empreinte mécanique, qui est d'une très grande précision, tant au niveau de la prise d'empreinte optique que de la réalisation de la prothèse proprement dite du fait de l'absence d'erreurs au niveau des phases intermédiaires, et du fait de la prise en compte d'un certain nombre de paramètres extérieurs tels que forme des dents antagonistes et adjacentes, et usure des dents symétriques, dans le cas d'une prothèse dentaire.

**Revendication**

1. Procédé de réalisation d'une prothèse consistant à réaliser une empreinte optique de la partie du corps destinée à recevoir la prothèse par une technique d'interférométrie, à réaliser une conversion analogique numérique ou analogique électrique de l'information obtenue lors de la prise de l'empreinte, puis à effectuer un traitement des données obtenues par la prise d'empreinte en adaptant celles-ci à des informations théoriques stockées dans la mémoire du calculateur utilisé pour le traitement, et en tenant compte d'un certain nombre de paramètres, tels que nature des matériaux utilisés, environnement de la prothèse, conditions d'utilisation de celle-ci, en vue de déterminer la forme de la prothèse, puis à fournir les informations obtenues à une machine-outil à commande numérique réalisant la sculpture de la prothèse.

2. Procédé selon la revendication 1, caractérisé en ce qu'il consiste à réaliser la prise d'empreinte par la technique d'holographie.

3. Procédé selon la revendication 2, caractérisé en ce que l'onde est recueillie sur une plaque holographique avec en interférence une onde de référence de longueur d'onde connue.

4. Procédé selon la revendication 2, caractérisé en ce que l'information est reçue directement sur un convertisseur analogique numérique ou analogique électrique.

**Patentansprüche**

1. Verfahren zum Herstellen einer Prothese mit folgenden Verfahrensschritten:

Anfertigung eines optischen Abdrucks des zum Aufnehmen der Prothese bestimmten Körperteils mittels eines interferometrischen Verfahrens,

Analog-Digitalwandlung oder elektrische Analogwandlung der bei dem Abnehmen des Abdrucks gewonnenen Informationen,

Verarbeiten der durch das Abnehmen des Abdrucks gewonnenen Daten zur Formbestimmung der Prothese, wobei diese Daten an theoretische, in dem Speicher des für die Datenverarbeitung verwendeten Rechners gespeicherte Informationen angepaßt und eine gewisse Anzahl von Parametern berücksichtigt werden (wie z. B. die Art der verwendeten Materialien, die Umgebung der Prothese, deren Benutzungsbedingungen), sowie Zuführen der gewonnenen Informationen zu einer numerisch gesteuerten Werkzeugmaschine für die Herstellung der Prothesenskulptur.

2. Verfahren nach Anspruch 1, dadurch gekennzeichnet, daß der Abdruck durch ein holographisches Verfahren gewonnen wird.

3. Verfahren nach Anspruch 2, dadurch gekennzeichnet, daß die Welle auf einer holographischen Platte unter Interferenz mit einer Referenzwelle bekannter Wellenlänge aufgenommen wird.

4. Verfahren nach Anspruch 2, dadurch gekennzeichnet, daß die Information direkt auf einem Analog-Digitalwandler oder einem elektrischen Analogwandler aufgenommen wird.

## Claims

1. A process for making a prosthesis, consisting in making an optical impression of the part of the body intended to receive the prosthesis, by an interferometric technique, converting the data obtained in making the impression into their digital or electrical analogue, and then processing the data obtained through the impression, by adapting them to the theoretical data stored in the memory of the computer used for the processing, while taking account of a certain number of parameters such as the nature of the materials to be used, the environment of the prosthesis and the conditions of its utilisation, with a view to determining the shape of the prosthesis, and finally feeding the resulting data into a numerically controlled machine tool which will effect the sculpture of the prosthesis.

2. A process as in Claim 1, characterised in that the it consists in making the impression by the holographic technique.

3. A process as in Claim 2, characterised in that the wave is recorded on a holographic plate with interference against a reference wave of known wavelength.

4. A process as in Claim 2, characterised in that the data are recorded directly in a numerical or electrical analogue converter.

## FIG.1

## FIG.2

## FIG.3

## FIG.4

## FIG.5